# EUROPEAN PATENT APPLICATION

(11) **EP 4 746 091 A1**
(43) Date of publication of application: **20.05.2026**
(21) Application number: 25211610.8
(22) Date of filing: 28.10.2025
(51) Int. Cl.: H01M 10/04, H01M 50/471, H01M 50/595

(54) **POWER STORAGE DEVICE AND METHOD OF MANUFACTURING POWER STORAGE DEVICE**

(30) Priority: 18.11.2024 JP 2024200301
(71) Applicant: TOYOTA JIDOSHA KABUSHIKI KAISHA, Toyota-shi, Aichi-ken 471-8571 (JP)
(72) Inventor: KAMO, Yoshiro, Toyota-shi, 471-8571 (JP)
(74) Representative: TBK

(57) **Abstract**

A power storage device 10 has a plate-shaped battery 12 and a plate-shaped member 14. The plate-shaped member 14 is disposed at a thickness direction one side of the plate-shaped battery 12 in a state in which a thickness direction of the plate-shaped member 14 faces in a same direction as a thickness direction of the plate-shaped battery 12. Further, the power storage device 10 has an adhesive 16 disposed between the plate-shaped battery 12 and the plate-shaped member 14. The adhesive 16 fixes the plate-shaped battery 12 and the plate-shaped member 14. The power storage device 10 further has at least one tacky member 18 disposed between the plate-shaped battery 12 and the plate-shaped member 14. The tacky member 18 fixes the plate-shaped battery 12 and the plate-shaped member 14.

## Description

### BACKGROUND

### Technical Field

The present disclosure relates to a power storage device and a method of manufacturing a power storage device.

### Related Art

The power storage device disclosed in Patent Document 1 has a structure in which a bipolar battery module and external collector plates are adhered by an adhesive.

### Prior Art Documents

### Patent Documents

Patent Document 1: Japanese Patent Application Laid-Open (JP-A) No. 2024-55266

### SUMMARY

An object of the present disclosure is to, in a power storage device having a structure in which a plate-shaped battery such as a bipolar battery module and a plate-shaped member such as an external collector plate are adhered by an adhesive, improve the quality of the power storage device.

Another object of the present disclosure is to improve manufacturing efficiency in a method of manufacturing a power storage device having a structure in which a plate-shaped battery such as a bipolar battery module and a plate-shaped member such as an external collector plate are adhered by an adhesive.

### (Power Storage Device)

A power storage device relating to a first aspect has: a plate-shaped battery; a plate-shaped member disposed at a thickness direction one side of the plate-shaped battery, in a state in which a thickness direction of the plate-shaped member faces in a same direction as a thickness direction of the plate-shaped battery; an adhesive disposed between the plate-shaped battery and the plate-shaped member, and fixing the plate-shaped battery and the plate-shaped member; and at least one tacky member disposed between the plate-shaped battery and the plate-shaped member, and fixing the plate-shaped battery and the plate-shaped member.

In the present aspect, the power storage device has the plate-shaped battery and the plate-shaped member. The plate-shaped member is disposed at a thickness direction one side of the plate-shaped battery, in a state in which the thickness direction of the plate-shaped member faces in the same direction as the thickness direction of the plate-shaped battery. Further, the power storage device has the adhesive that is disposed between the plate-shaped-battery and the plate-shaped member. The adhesive fixes the plate-shaped battery and the plate-shaped member.

By the way, in a power storage device having such a structure, it is preferable from the standpoint of quality that managing of the thickness of the layer that is formed between the plate-shaped battery and the plate-shaped member (the layer in which the adhesive is disposed, hereinafter called the fixing layer upon occasion) be carried out appropriately. Thus, in order to carry out thickness management appropriately, it has been thought to carry out a compressing step at the time of the fixing by the adhesive. Due thereto, even in a case in which, before the fixing of the plate-shaped battery and the plate-shaped member, the surfaces to be joined of the both are not completely flat surfaces and are warped, hardening of the adhesive can take place in the state in which this warping is corrected. However, there are cases in which carrying out management of the thickness appropriately only in the compressing step is not easy.

Thus, in the present aspect, the power storage device has the at least one tacky member disposed between the plate-shaped battery and the plate-shaped member. The tacky member fixes the plate-shaped battery and the plate-shaped member.

Therefore, the quality of the power storage device can be improved. The reason for this is, because the tacky member exhibits the adhesive force needed for correcting the warping of the plate-shaped battery and the like in a short compressing time, managing of the thickness of the layer formed between the plate-shaped battery and the plate-shaped member is easy as compared with a power storage device that does not have such a tacky member.

Note that, in the embodiment that is described hereinafter, the power storage device is a large battery pack that is installed beneath the floor of a vehicle. However, the power storage device of the present aspect is not limited to this.

Note that, in the embodiment that is described hereinafter, the plate-shaped battery is a bipolar battery module, but the present aspect is not limited to this. The plate-shaped battery may be a monopolar battery cell for example. Further, it suffices for the plate-shaped battery to be a battery whose thickness direction is the shortest sides among the respective sides of the plate-shaped battery that extend in three different directions. In other words, the direction of the shortest sides among the respective sides that extend in the three directions of the plate-shaped battery is the thickness direction of the plate-shaped battery. For example, the plate-shaped battery may be a so-called prismatic cell (a battery cell in which an electrode body is housed in a case that is a metal container).

Note that, although the plate-shaped member is a collector plate, a conductive plate or a cooler in the embodiment that is described hereinafter, the plate-shaped member of the present aspect is not limited to this. For example, the plate-shaped member may be another plate-shaped battery.

Note that, in the embodiment that is described hereinafter, the plate-shaped member functions to conductively connect the plate-shaped battery and another plate-shaped battery, but the plate-shaped member of the present aspect is not limited to this.

Note that, in the embodiment that is described hereinafter, the adhesive is an electrically-conductive adhesive, but the adhesive of the present aspect is not limited to this.

Note that, in the embodiment that is described hereinafter, the tacky member is a double-sided tacky tape, but the tacky member of the present aspect is not limited to this.

Note that, in the embodiment that is described hereinafter, the power storage device has plural fixing layers, and a tacky member is disposed in all of the plural fixing layers, but the present aspect is not limited to this. The power storage device of the present aspect does not have to have plural fixing layers. Further, even in a case in which the power storage device has plural fixing layers, the tacky member does not have to be placed in all of the fixing layers. Note that, in the embodiment that is described hereinafter, the power storage device is manufactured through a compressing step, and the compressing step is finished without waiting for hardening of the adhesive. However, the power storage device of the present aspect is not limited to this. For example, the compressing step may be finished after the adhesive has hardened or has substantially hardened. In addition, the power storage device of the present aspect is fundamentally not limited to being manufactured by a specific manufacturing method.

In a power storage device relating to a second aspect, in the first aspect, the at least one tacky member includes a tacky member disposed along a first direction that is a direction orthogonal to the thickness direction.

In the present aspect, the at least one tacky member includes a tacky member that is disposed along the first direction that is a direction orthogonal to the thickness direction. Therefore, the work of placing the tacky member, which is disposed along the first direction, is easy.

Note that, in the embodiment that is described hereinafter, the first direction coincides with the vehicle longitudinal direction, but the first direction of the present aspect is not limited to this.

In a power storage device relating to a third aspect, in the first aspect, the at least one tacky member includes a central region tacky member that is disposed along a first direction that is a direction orthogonal to the thickness direction, and is disposed in a central 30% region of the plate-shaped battery in a second direction that is a direction orthogonal to both the thickness direction and the first direction.

In the present aspect, the at least one tacky member includes a central region tacky member. The central region tacky member is a tacky member that is disposed along the first direction that is a direction orthogonal to the thickness direction, and is disposed in the central 30% region of the plate-shaped battery in the second direction that is a direction orthogonal to both the thickness direction and the first direction.

Therefore, the tacky member can be made to function effectively, as compared with a form in which the at least one tacky member does not include the central region tacky member. The reason for this is because, before the compressing step, it is often the case that the plate-shaped battery and the plate-shaped member are greatly apart in this central 30% region of the plate-shaped battery in the second direction.

In a power storage device relating to a fourth aspect, in the first aspect, the at least one tacky member is structured from only at least one central region tacky member that is disposed along a first direction that is a direction orthogonal to the thickness direction, and is disposed in a central 30% region of the plate-shaped battery in a second direction that is a direction orthogonal to both the thickness direction and the first direction.

In the present aspect, the at least one tacky member is structured from only the at least one central region tacky member. The central region tacky member is a tacky member that is disposed along the first direction that is a direction orthogonal to the thickness direction, and is disposed in the central 30% region of the plate-shaped battery in the second direction that is a direction orthogonal to both the thickness direction and the first direction. Therefore, the tacky member can be made to function effectively, as compared with a form in which the at least one tacky member does not include the central region tacky member. Further, the number of the tacky members can be reduced as compared with a form in which the at least one tacky member includes a tacky member other than the central region tacky member.

In a power storage device relating to a fifth aspect, in the first aspect, the at least one tacky member includes at least one central region tacky member that is disposed along a first direction that is a direction orthogonal to the thickness direction, and is disposed in a region that is a central 30% region of the plate-shaped battery in a second direction that is a direction orthogonal to both the thickness direction and the first direction, and at least one outer side region tacky member that is disposed along the first direction and is disposed in a region that is other than the central 30% region of the plate-shaped battery in the second direction, and a placement surface area of the central region tacky member is greater than a placement surface area of the outer side region tacky member.

In the present aspect, the at least one tacky member includes at least one central region tacky member and at least one outer side region tacky member. The central region tacky member is a tacky member that is disposed along the first direction and is disposed in a region that is the central 30% region of the plate-shaped battery in the second direction. The outer side region tacky member is a tacky member that is disposed along the first direction and is disposed at a region that is other than the central 30% region of the plate-shaped battery in the second direction.

Further, the placement surface area of the central region tacky member is larger than that of the outer side region tacky member.

Therefore, the quality of the power storage device can be improved effectively with respect to the placement surface area of the tacky members.

In a power storage device relating to a sixth aspect, in any of the first through fifth aspects, a placement surface area of the adhesive is greater than a placement surface area of the at least one tacky member.

By the way, usually, it is easier for an adhesive to ensure the fixing strength of the plate-shaped battery and the plate-shaped member than a tacky member.

Thus, in the present aspect, the placement surface area of the adhesive is larger than that of the at least one tacky member.

Therefore, it is easy to ensure the fixing strength of the plate-shaped battery and the plate-shaped member.

In a power storage device relating to a seventh aspect, the power storage device of any of the first through sixth aspects has a wired object disposed between the plate-shaped battery and the plate-shaped member, wherein the at least one tacky member includes an adjacent tacky member that is adjacent to the wired object so as to run along the wired object, and an adhesive is not disposed between the adjacent tacky member and the wired object.

In the present aspect, the power storage device has a wired object that is disposed between the plate-shaped battery and the plate-shaped member.

By the way, there is the concern that problems will arise if the adhesive contacts the wired object that is disposed between the plate-shaped battery and the plate-shaped member. For example, corrosion of the wired object due to components of the adhesive can be thought of as such a problem.

Thus, in the present aspect, the at least one tacky member includes the adjacent tacky member that is adjacent to the wired object so as to run along that wired object. Further, the adhesive is not placed between the adjacent tacky member and the wired object.

Therefore, while contact of the adhesive with the wired object is suppressed, the fixing strength of the plate-shaped battery and the plate-shaped member at a position adjacent to the wired object can be ensured by the adjacent tacky member. The reason for this is that the adhesive has the property of spreading when squashed, whereas this property of the tacky member is relatively weak.

Note that, in the embodiment that is described hereinafter, the wired object is a thermistor that functions to measure temperature, but the wired object of the present aspect is not limited to this.

In a power storage device relating to an eighth aspect, the power storage device of any of the first through sixth aspects has a wired object disposed between the plate-shaped battery and the plate-shaped member, wherein the at least one tacky member includes a pair of adjacent tacky members that are adjacent to the wired object so as to run along the wired object, the wired object is positioned between the pair of adjacent tacky members, and an adhesive is not disposed between the pair of adjacent tacky members.

In the present aspect, the power storage device has a wired object that is disposed between the plate-shaped battery and the plate-shaped member.

By the way, there is the concern that problems will arise if the adhesive contacts the wired object that is disposed between the plate-shaped battery and the plate-shaped member. For example, corrosion of the wired object due to components of the adhesive can be thought of as such a problem.

Thus, in the present aspect, the at least one tacky member includes a pair of adjacent tacky members that are adjacent to the wired object so as to run along that wired object. The wired object is positioned between the pair of adjacent tacky members, and the adhesive is not disposed between the pair of adjacent tacky members.

Therefore, while contact of the adhesive with the wired object is prevented, the fixing strength of the plate-shaped battery and the plate-shaped member at positions adjacent to the wired object can be ensured by the pair of adjacent tacky members.

In a power storage device relating to a ninth aspect, in the seventh or eighth aspect, the wired object functions to measure temperature, and the adjacent tacky member is a thermally-conductive tacky member.

In the present aspect, the wired object functions to measure temperature. Therefore, information of the temperature between the plate-shaped battery and the plate-shaped member can be acquired.

By the way, if the temperature in the vicinity of the wired object rises locally, the desired temperature information cannot be acquired. Thus, in order to prevent a local rise in temperature, it is conceivable to place a thermally-conductive adhesive in the vicinity of the wired object. However, if the adhesive contacts the wired object, there is the concern that temperature will not be able to be measured accurately, and there is the concern that the wired object will corrode.

Thus, in the present aspect, the adjacent tacky member is a thermally-conductive tacky member.

Therefore, a local rise in temperature in a vicinity of the wired object can be suppressed, and the aforementioned problems can be prevented.

In a power storage device relating to a tenth aspect, in the ninth aspect, the adhesive includes a thermally-conductive adhesive, and the thermally-conductive adhesive is adjacent to the adjacent tacky member so as to run along the adjacent tacky member.

In the present aspect, the adhesive includes a thermally-conductive adhesive. The thermally-conductive adhesive is adjacent to the adjacent tacky member so as to run along the adjacent tacky member.

Therefore, a local rise in temperature in a vicinity of the wired object can be suppressed more effectively, and the aforementioned problems can be prevented.

In a power storage device relating to an eleventh aspect, in any of the first through tenth aspects, the plate-shaped battery is a bipolar battery module that has a bipolar electrode stack, and a holding body holding peripheral edge portions of the electrode stack.

In the present aspect, the plate-shaped battery is a bipolar battery module. The bipolar battery module has a bipolar electrode stack, and a holding body that holds the peripheral edge portions of the electrode stack.

Therefore, quality can be improved in the power storage device in which the bipolar battery module and the plate-shaped member are stacked.

In a power storage device relating to a twelfth aspect, in the eleventh aspect, plural plate-shaped batteries are provided, one or plural plate-shaped members are provided so as to be nipped between two plate-shaped batteries that are adjacent to one another among the plural plate-shaped batteries, and the two plate-shaped batteries that are adjacent to one another among the plural plate-shaped batteries are conductively connected via the plate-shaped member that is nipped between the two plate-shaped batteries.

In the present aspect, plural plate-shaped batteries are provided, and the one or plural plate-shaped members are provided so as to be nipped between two of the plate-shaped batteries that are adjacent to one another among the plural plate-shaped batteries. Further, the two plate-shaped batteries that are adjacent to one another among the plural plate-shaped batteries are conductively connected via the plate-shaped member that is nipped between these two plate-shaped batteries.

Therefore, from the standpoint of quality, it is greatly desirable that the managing of the thickness of the layers that are formed between the plate-shaped batteries and the plate-shaped member (the layers in which the adhesive is disposed) be carried out appropriately. With regard to this point, because the power storage device of the present aspect has the at least one tacky member disposed between the plate-shaped battery and the plate-shaped member, the quality of the power storage device can be ensured.

### (Method of Manufacturing Power Storage Device)

A method of manufacturing a power storage device relating to a thirteenth aspect is a method of manufacturing a power storage device that has a plate-shaped battery, a plate-shaped member disposed at a thickness direction one side of the plate-shaped battery, in a state in which a thickness direction of the plate-shaped member faces in a same direction as a thickness direction of the plate-shaped battery, an adhesive disposed between the plate-shaped battery and the plate-shaped member, and fixing the plate-shaped battery and the plate-shaped member, and at least one tacky member disposed between the plate-shaped battery and the plate-shaped member, and fixing the plate-shaped battery and the plate-shaped member, the method of manufacturing including a compressing step of, in a state in which the adhesive before hardening and the tacky member are disposed between the plate-shaped battery and the plate-shaped member, applying compressive load to the plate-shaped battery and the plate-shaped member in thickness directions thereof.

In the present aspect, the manufacturing method includes the compressing step. The compressing step is a step of, in the state in which the adhesive before hardening and the tacky member are placed between the plate-shaped battery and the plate-shaped member, applying compressive load to the plate-shaped battery and the plate-shaped member in the thickness directions thereof.

Therefore, as compared with a form in which the manufacturing method does not include the compressing step, managing of the thickness of the layer that is formed between the plate-shaped battery and the plate-shaped member (the layer in which the adhesive is disposed) can be carried out appropriately.

Note that, in the embodiment that is described hereinafter, the application of load is finished while the adhesive is in an unhardened state, but the present aspect is not limited to this.

In a method of manufacturing a power storage device relating to a fourteenth aspect, in the thirteenth aspect, a time period over which the compressive load is applied in the compressing step is 30 minutes or less.

In the present aspect, the time over which the compressive load is applied in the compressing step is 30 minutes or less (more preferably one minute or less, and even more preferably 30 seconds or less).

Therefore, the mass producibility can be improved as compared with a form in which the compressing time is several hours for example. Note that the tacky member exhibits the adhesive force necessary for correcting the warping of the plate-shaped battery and the like, even in a compressing time that is a short time as compared with the adhesive. Therefore, the application of load can be finished while the adhesive is in an unhardened state.

As described above, in accordance with the present disclosure, in a power storage device having a structure in which a plate-shaped battery and a plate-shaped member are adhered by an adhesive, the quality of the power storage device can be improved.

Further, in accordance with the present disclosure, manufacturing efficiency can be improved in a method of manufacturing a power storage device having a structure in which a plate-shaped battery and a plate-shaped member are adhered by an adhesive.

### BRIEF DESCRIPTION OF THE DRAWINGS

Fig. 1 is a schematic sectional view illustrating a manufacturing step (stacking step) of a power storage device relating to a present embodiment;
Fig. 2 is a schematic sectional view illustrating a manufacturing step (compressing step) of the power storage device relating to the present embodiment;
Fig. 3 is a schematic sectional view illustrating the power storage device relating to the present embodiment;
Fig. 4 is a cross-sectional view illustrating, in an enlarged manner, a fixing layer between a plate-shaped battery and a plate-shaped member;
Fig. 5 is a schematic sectional view illustrating, in an enlarged manner, a structure in which a temperature measuring device is provided between the plate-shaped battery and the plate-shaped member;
Fig. 6 is a schematic drawing in which fixing layers, in which the temperature measuring devices are provided between the plate-shaped batteries and the plate-shaped members, are seen from a stacking direction;
Fig. 7 is a schematic sectional view of a bipolar battery module serving as the plate-shaped battery; and
Fig. 8 is a cross-sectional view illustrating the structure of adjacent tacky members relating to a modified example.

### DETAILED DESCRIPTION

A power storage device 10 relating to an embodiment is described hereinafter.

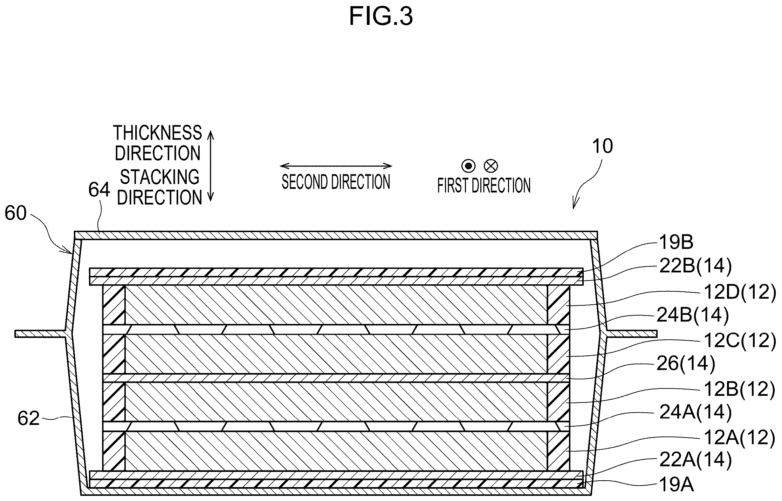

As illustrated in Fig. 3, the power storage device 10 of the present embodiment has plural plate-shaped batteries 12 and plural plate-shaped members 14.

The plate-shaped members 14 are disposed at thickness direction one sides and another sides of the plate-shaped batteries 12 in a state in which the thickness directions of the plate-shaped members 14 face in the same direction as the thickness directions of the plate-shaped batteries 12. Due thereto, the plural plate-shaped batteries 12 and the plural plate-shaped members 14 are in a state of being disposed alternately along the stacking direction, in a state in which the thickness directions thereof face in the stacking direction.

The plural plate-shaped batteries 12 are structured from a first plate-shaped battery 12A, a second plate-shaped battery 12B, a third plate-shaped battery 12C and a fourth plate-shaped battery 12D. When not particularly distinguishing therebetween, these are simply called the plate-shaped batteries 12.

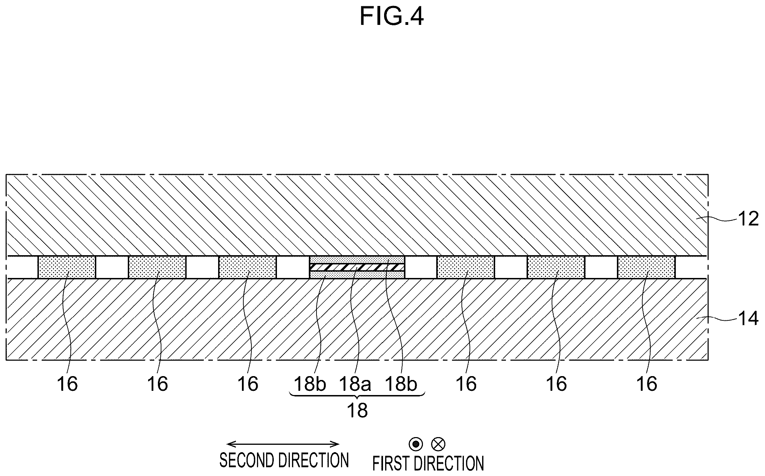

As illustrated in Fig. 4, the plate-shaped battery 12 and the plate-shaped member 14 that are adjacent to one another are fixed by an adhesive 16 and a tacky member 18. In other words, the power storage device 10 has the adhesives 16 and the tacky members 18.

The adhesive 16 is disposed between the plate-shaped battery 12 and the plate-shaped member 14, and fixes the plate-shaped battery 12 and the plate-shaped member 14. The plural tacky members 18 are disposed between the plate-shaped batteries 12 and the plate-shaped members 14, and fix the plate-shaped batteries 12 and the plate-shaped members 14.

The adhesives 16 and the tacky members 18 are disposed at all of the layers that are between the plate-shaped batteries 12 and the plate-shaped members 14.

The adhesive 16 is an electrically-conductive adhesive. An electrically-conductive adhesive is an adhesive having the property of passing electricity therethrough, and means a material that is used for ensuring a mechanical connection and simultaneously an electrical connection. For example, an electrically-conductive adhesive has a base material formed from a resin (e.g., epoxy, acrylic), and metal fine particles (e.g., silver, copper, carbon) that are electrically-conductive and that are dispersed in the base material.

The tacky member 18 is, specifically, a double-sided tacky tape 18. The double-sided tacky tape 18 has a base material 18a and tackifiers 18b provided at both surfaces of the base material 18a.

### (Plate-Shaped Battery 12)

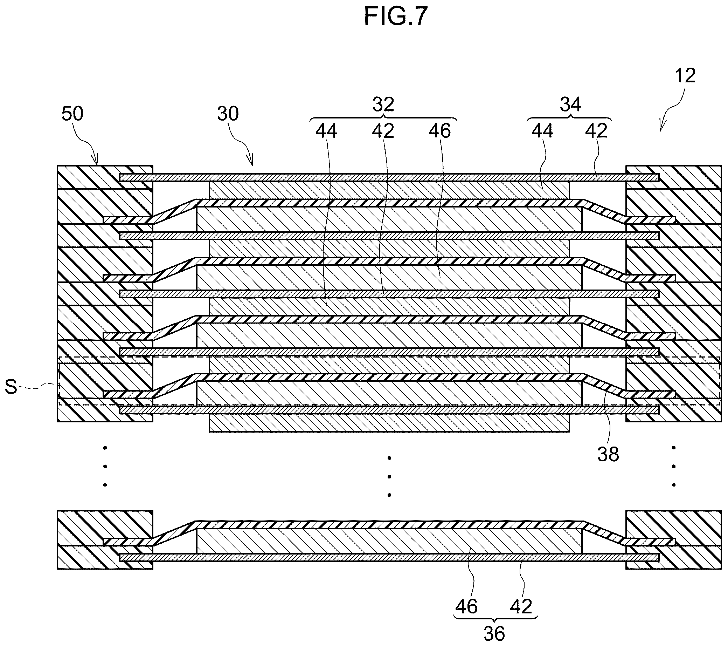

Fig. 7 is a schematic sectional view of the plate-shaped battery 12 of the present embodiment. As illustrated in Fig. 7, the plate-shaped battery 12 of the present embodiment is the bipolar battery module 12.

The bipolar battery module 12 has a bipolar electrode stack 30, and a frame-shaped holding body 50 that holds the peripheral edge portions of the electrode stack 30.

The electrode stack 30 has a one side electrode 34 that is furthest toward a stacking direction one side, plural bipolar electrodes 32, an another side electrode 36 that is furthest toward the stacking direction another side, and plural separators 38.

The one side electrode 34 has a collector 42 and a positive electrode active material layer 44.

The bipolar electrode 32 has a negative electrode active material layer 46, the collector 42 and the positive electrode active material layer 44.

The another side electrode 36 has the negative electrode active material layer 46 and the collector 42.

The separators 38 are disposed between electrodes that are adjacent to one another in the stacking direction.

The holding body 50 is formed of a synthetic resin. The holding body 50 holds the plural collectors 42, and holds the plural separators 38. The method of forming the holding body 50 is not particularly limited.

At the bipolar battery module 12, portion S that is surrounded by the dashed line in the drawing can be understood as being one cell. The number of cells of the bipolar battery module 12 is 25 - 34 for example. An electrolyte liquid is injected in each cell.

Note that the respective plate-shaped members 14 conductively connect, via the adhesives 16 and the like, the collector 42 that is furthest toward the stacking direction one side of the bipolar battery module 12, and the collector 42 that is furthest toward the stacking direction another side of the bipolar battery module 12 that is adjacent to the stacking direction one side of the previously-mentioned bipolar battery module 12.

### (Plate-Shaped Member 14)

As illustrated in Fig. 3, the plural plate-shaped members 14 include a pair of collector plates 22A, 22B, coolers 24 and an electrically-conductive plate 26. Specifically, the plural plate-shaped members 14 are structured by the pair of collector plates 22A, 22B, the two coolers 24, and the one electrically-conductive plate 26.

The pair of collector plates 22A, 22B are members for taking electricity out from the power storage device 10. The pair of collector plates 22A, 22B are disposed at the stacking direction one side and another side of the plural (four) plate-shaped batteries 12.

The coolers 24 are made of metal. Each of the coolers 24 conductively connects the two plate-shaped batteries 12 that are adjacent to one another in the stacking direction with that cooler 24 therebetween, and functions to cool those two plate-shaped batteries 12. Specifically, the two coolers 24 are structured from a first cooler 24A that conductively connects the first plate-shaped battery 12A and the second plate-shaped battery 12B, and a second cooler 24B that conductively connects the third plate-shaped battery 12C and the fourth plate-shaped battery 12D.

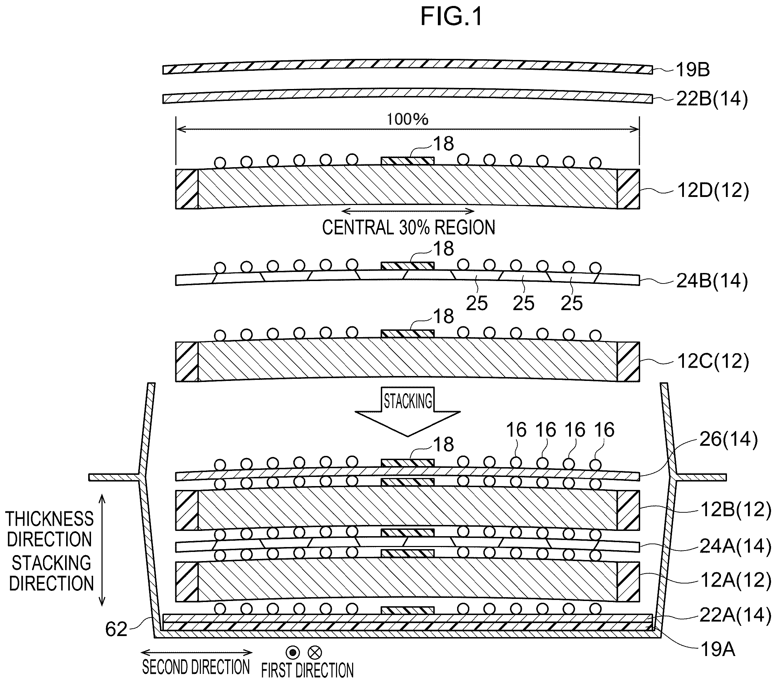

As illustrated in Fig. 1, the cooler 24 has coolant passages 25 at the interior thereof. The plural coolant passages 25 are formed so as to extend in a first direction and so as to be lined-up in a second direction.

The electrically-conductive plate 26 is made of metal. The electrically-conductive plate 26 functions to conductively connect the two plate-shaped batteries 12 that are adjacent to one another in the stacking direction. Specifically, the electrically-conductive plate 26 conductively connects the second plate-shaped battery 12B and the third plate-shaped battery 12C.

Further, the power storage device 10 has a first insulating sheet 19A and a second insulating sheet 19B. The first insulating sheet 19A is disposed at the stacking direction outer side of the first collector plate 22A, and the second insulating sheet 19B is disposed at the stacking direction outer side of the second collector plate 22B. The insulating sheets 19A, 19B are fixed by adhesives to the collector plates 22A, 22B, respectively. These adhesives are adhesives for structures, and are a type of adhesive that is different from the above-described adhesive 16 (electrically-conductive adhesive).

The power storage device 10 has a case 60 that houses the plural plate-shaped batteries 12 and the plural plate-shaped members 14. The case 60 has a lower case 62 and an upper case 64.

The power storage device 10 is a battery pack that is installed beneath the floor of a vehicle. In the state in which the power storage device 10 is installed beneath the floor of a vehicle, the first direction coincides with the vehicle longitudinal direction, and the second direction coincides with the vehicle transverse direction. The second direction central position of the power storage device 10 coincides with the vehicle transverse direction central position of the vehicle.

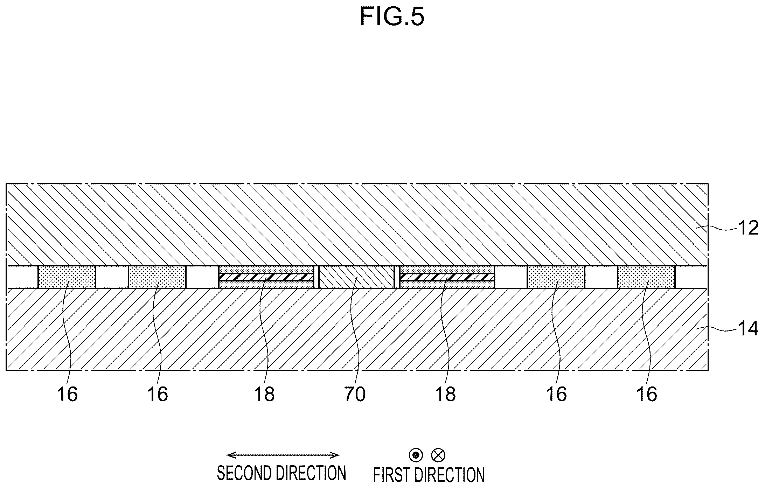

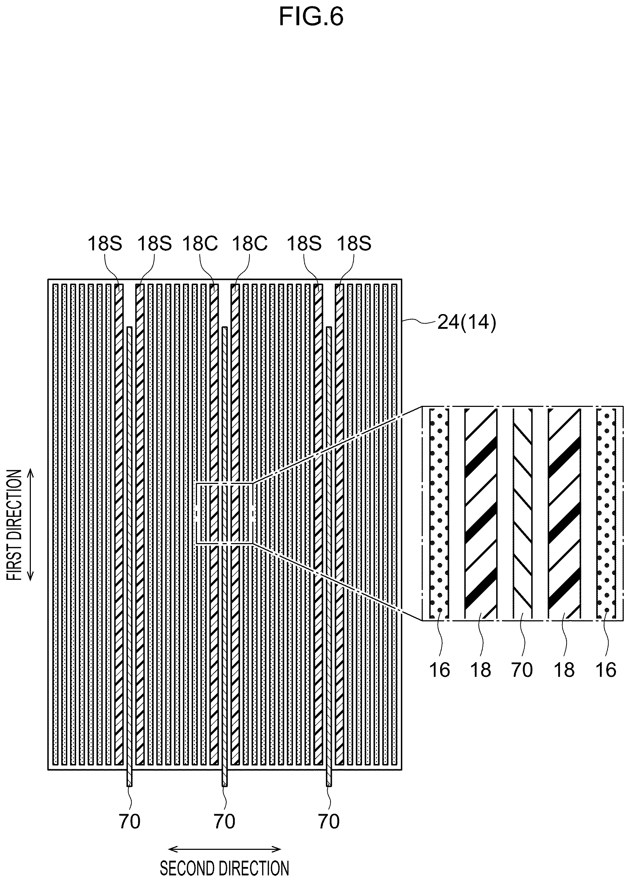

Note that the power storage device 10 may have temperature measuring devices 70 for acquiring information of the temperatures between the plate-shaped batteries 12 and the plate-shaped members 14. Fig. 5 is a schematic sectional view illustrating, in an enlarged manner, a structure in which the temperature measuring device 70 is provided between the plate-shaped battery 12 and the plate-shaped member 14. Fig. 6 is a schematic drawing in which the above-described structure (fixing layers) is seen from the stacking direction.

The temperature measuring device 70 is a device that extends linearly and has a thermistor that is a temperature measuring section and an FPC connected to the thermistor. The temperature measuring device 70 is disposed between the plate-shaped battery 12 and the plate-shaped member 14. More specifically, the temperature measuring device 70 is disposed between the plate-shaped battery 12 and the plate-shaped member 14 so as to extend rectilinearly, parallel to the first direction. Hereinafter, there are cases in which the temperature measuring device 70 is called the wired object 70.

In the example illustrated in Fig. 6, three of the temperature measuring devices 70 are provided in the fixing layers between the between the plate-shaped batteries 12 and the plate-shaped members 14. Each of the temperature measuring devices 70 extends rectilinearly and parallel to the first direction. A pair of the adjacent tacky members 18 are provided in correspondence with one of the temperature measuring devices 70. The pair of adjacent tacky members 18 are adjacent to the temperature measuring device 70 so as to run along that temperature measuring device 70. The temperature measuring device 70 is positioned between the pair of adjacent tacky members 18, and the adhesives 16 are not disposed between the pair of adjacent tacky members 18.

The adjacent tacky members 18 are the tacky members 18 that are thermally-conductive, and specifically, are thermally-conductive tacky tapes. A thermally-conductive tacky tape means a tacky tape that has the characteristic of transmitting heat efficiently. The thermally-conductive tacky tapes 18 of the present embodiment have a base material having excellent thermal conductivity, and tackifiers provided at both surfaces of the base material and having excellent thermal conductivity. The tackifier 18b that has excellent thermal conductivity has, for example, an acrylic or silicon tackifier and a thermally-conductive filler (e.g., fine particles of aluminum oxide, magnesium oxide or aluminum nitride) that is mixed together with the tackifier.

### (Manufacturing Method)

A method of manufacturing the power storage device 10 of the present embodiment includes the following steps in that order:
(1) a preparatory step of readying respective stacked objects;
(2) a placement step of placing the adhesives 16 and the tacky members 18;
(3) a stacking step of stacking the respective stacked objects; and
(4) a compressing step of applying compressive load in the stacking direction to a stack in which the respective stacked objects are stacked.

In the preparatory step, the respective stacked objects are readied. These stacked objects are the above-described insulating sheets 19A, 19B, collector plates 22A, 22B, bipolar battery module 12, coolers 24, collector plates 22A, 22B and the like.

In the placing step, the adhesives 16 and the tacky members 18 are placed.

As illustrated in Fig. 1, the adhesives 16 are placed so as to extend in the first direction at plural positions that differ in the second direction. Specifically, the adhesives 16 are applied in the form of beads (e.g., beads of a diameter of 2 - 4 mm) so as to extend in the first direction at plural positions that differ in the second direction.

The tacky members 18 are placed so as to extend in the first direction at plural positions that differ in the second direction. The positions where the tacky members 18 are placed are preferably positions that do not contact the adhesives 16. Positions that do not contact the adhesives 16 mean positions that do not contact the adhesives 16 even after the adhesives 16 spread-out in the second direction due to the compressing step.

The adhesive 16 and the tacky member 18 are placed on the surface that is at the gravitational direction lower side among the pair of surfaces that are to be adhered.

In the stacking step, as illustrated in Fig. 1, the respective stacked objects are stacked.

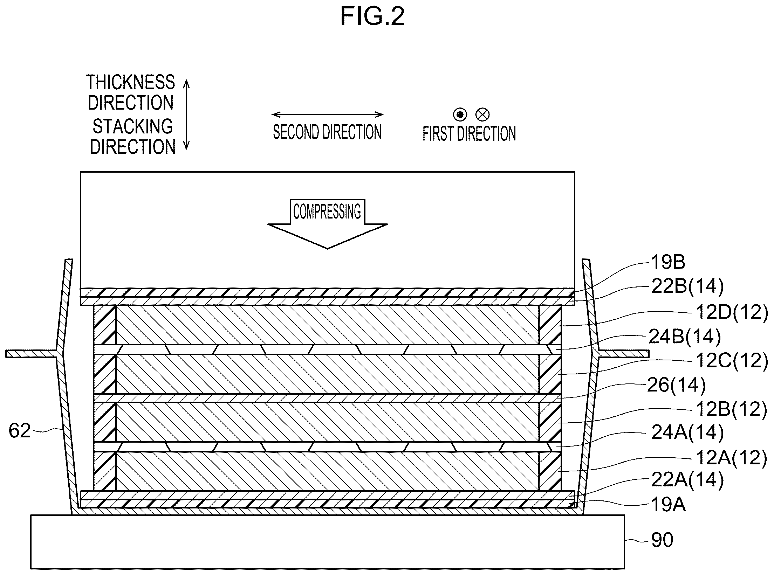

As illustrated in Fig. 2, the compressing step is carried out in a state in which the respective stacked objects are placed on a table 90 at a facility.

The time period over which compressive load continues to be applied in the compressing step (the compressing time) is 10 seconds for example. However, the compressing time is not limited to this. A shorter compressing time is better from the standpoint of manufacturing efficiency, and the compressing time is preferably 30 minutes or less, and more preferably 1 minute or less, and even more preferably 30 seconds or less.

As illustrated in Fig. 1, the compressing step is carried out in a state in which the stacked body is housed in the lower case 62. In other words, the lower case 62 also is included among the parts that are objects of compression. Note that the parts that are the objects of compression may include, in addition to those described above, an unillustrated shear panel assembly for example. A shear panel assembly is a panel-shaped member that protects the power storage device 10 that is the battery pack from objects that have fallen onto roads and the like.

### <Operation and Effects>

Operation and effects of the present embodiment are described next.

In the present embodiment, as illustrated in Fig. 3, the power storage device 10 has the plate-shaped batteries 12 and the plate-shaped members 14. The plate-shaped members 14 are disposed at thickness direction one sides of the plate-shaped batteries 12, in a state in which the thickness directions of the plate-shaped members 14 face in the same direction as the thickness directions of the plate-shaped batteries 12. Further, as illustrated in Fig. 4, the power storage device 10 has the adhesives 16 that are disposed between the plate-shaped batteries 12 and the plate-shaped members 14. The adhesives 16 fix the plate-shaped batteries 12 and the plate-shaped members 14.

Incidentally, in the power storage device 10 that has such a structure, it is preferable from the standpoint of quality that managing of the thicknesses of the layers that are formed between the plate-shaped batteries 12 and the plate-shaped members 14 (the layers in which the adhesives 16 are disposed, the fixing layers) be carried out appropriately. Thus, in order to carry out thickness management appropriately, it has been thought to carry out the compressing step at the time of the fixing by the adhesives 16. Due thereto, even in a case in which, before the fixing of the plate-shaped batteries 12 and the plate-shaped members 14, the surfaces to be joined of both are not completely flat surfaces and are warped, hardening of the adhesives 16 can take place in the state in which this warping is corrected. However, there are cases in which carrying out management of the thickness appropriately only in the compressing step is not easy.

Thus, in the present embodiment, as illustrated in Fig. 4, the power storage device 10 has the at least one tacky member 18 disposed between the plate-shaped battery 12 and the plate-shaped member 14. The tacky member 18 fixes the plate-shaped battery 12 and the plate-shaped member 14.

Therefore, the quality of the power storage device 10 can be improved. The reason for this is, because the tacky members 18 exhibit the adhesive force needed for correcting the warping of the plate-shaped batteries 12 and the like in a short compressing time, managing of the thicknesses of the layers formed between the plate-shaped batteries 12 and the plate-shaped members 14 is easy as compared with a power storage device that does not have such tacky members 18.

Further, in the present embodiment, as illustrated in Fig. 4, the at least one tacky member 18 includes the tacky member 18 that is disposed along the first direction that is a direction orthogonal to the thickness direction.

Therefore, the work of placing the tacky member 18, which is disposed along the first direction, is easy.

Further, in the example illustrated in Fig. 1 or Fig. 6, the at least one tacky member 18 includes a central region tacky member 18C. The central region tacky member 18C is the tacky member 18 that is disposed along the first direction and is disposed in the region that is the central 30% of the plate-shaped battery 12 in the second direction.

Therefore, the tacky member 18 can be made to function effectively, as compared with a form in which the at least one tacky member 18 does not include the central region tacky member 18C. The reason for this is because, before the compressing step, it is often the case that the plate-shaped battery 12 and the plate-shaped member 14 are greatly apart in this central 30% region of the plate-shaped battery 12 in the second direction.

Note that, in the state before the compressing step, the plate-shaped batteries 12, the plate-shaped members 14 and the like of the present disclosure have shapes that are warped so as to be convex upwardly as the shapes thereof seen in the first direction (see Fig. 1), due to circumstances during manufacturing.

Further, in the example illustrated in Fig. 1, the at least one tacky member 18 is structured from only the at least one central region tacky member 18C. The central region tacky member 18C is the tacky member 18 that is disposed along the first direction and is disposed in the central 30% region of the plate-shaped battery 12 in the second direction. Therefore, the tacky member 18 can be made to function effectively, as compared with a form in which the at least one tacky member 18 does not include the central region tacky member 18C. Further, the number of the tacky members 18 can be reduced as compared with a form in which the at least one tacky member 18 includes the tacky member 18 other than the central region tacky member 18C.

In the example illustrated in Fig. 6, the at least one tacky member 18 includes the at least one central region tacky member 18C, and at least one outer side region tacky member 18S. The central region tacky member 18C is the tacky member 18 that is disposed along the first direction and is disposed in the central 30% region of the plate-shaped battery 12 in the second direction. The outer side region tacky member 18S is the tacky member 18 that is disposed along the first direction and is disposed at a region that is other than the central 30% region of the plate-shaped battery 12 in the second direction.

Here, although not illustrated, the placement surface area (total placement surface area) of the central region tacky members 18C may be made to be larger than that of the outer side region tacky members 18S.

In this case, the quality of the power storage device 10 can be improved effectively with respect to the placement surface area of the tacky members 18.

By the way, usually, it is easier for the adhesives 16 to ensure the fixing strength of the plate-shaped batteries 12 and the plate-shaped members 14 than the tacky members 18. Thus, in the present embodiment, as illustrated in Fig. 6, the placement surface area (total placement surface area) of the adhesives 16 may be made to be larger than that of the at least one tacky member 18.

In this case, it is easy to ensure the fixing strength of the plate-shaped batteries 12 and the plate-shaped members 14.

Further, in the example illustrated in Fig. 5 and Fig. 6, the power storage device 10 has the wired objects 70 that are disposed between the plate-shaped batteries 12 and the plate-shaped members 14.

By the way, there is the concern that problems will arise if the adhesives 16 contact the wired objects 70 that are disposed between the plate-shaped batteries 12 and the plate-shaped members 14. For example, corrosion of the wired objects 70 due to components of the adhesives 16 can be thought of as such a problem.

Thus, in the present embodiment, the at least one tacky member 18 includes the adjacent tacky members 18 that are adjacent to the wired object 70 so as to run along that wired object 70. Further, the adhesive 16 is not placed between the adjacent tacky members 18 and the wired object 70.

Therefore, while contact of the adhesives 16 with the wired objects 70 is suppressed, the fixing strength of the plate-shaped batteries 12 and the plate-shaped members 14 at positions adjacent to the wired objects 70 can be ensured by the adjacent tacky members 18. The reason for this is that the adhesives 16 have the property of spreading when squashed, whereas this property of the tacky members 18 is relatively weak.

Moreover, in the example illustrated in Fig. 5 and Fig. 6, the at least one tacky member 18 includes the pair of adjacent tacky members 18 that are adjacent to the wired object 70 so as to run along that wired object 70. The wired object 70 is positioned between the pair of adjacent tacky members 18, and the adhesive 16 is not disposed between the pair of adjacent tacky members 18.

Therefore, while contact of the adhesives 16 with the wired objects 70 is prevented, the fixing strength of the plate-shaped batteries 12 and the plate-shaped members 14 at positions adjacent to the wired objects 70 can be ensured by the pairs of adjacent tacky members 18.

Further, in the example illustrated in Fig. 5 and Fig. 6, the wired objects 70 function to measure temperature.

Therefore, information of the temperatures between the plate-shaped batteries 12 and the plate-shaped members 14 can be acquired.

By the way, if the temperature in the vicinity of the wired object 70 rises locally, the desired temperature information cannot be acquired. Thus, in order to prevent a local rise in temperature, it is conceivable to place a thermally-conductive adhesive in the vicinity of the wired object 70. However, if the adhesive contacts the wired object 70, there is the concern that temperature will not be able to be measured accurately, and there is the concern that the wired object 70 will corrode.

Thus, in the example illustrated in Fig. 5 and Fig. 6, the adjacent tacky members 18 are the thermally-conductive tacky members 18.

Therefore, a local rise in temperature in a vicinity of the wired object 70 can be suppressed, and the aforementioned problems can be prevented.

Further, in the present embodiment, the adhesives 16 may include the thermally-conductive adhesives 16. It is preferable that the thermally-conductive adhesives 16 be disposed so as to be adjacent to the adjacent tacky members 18 so as to run along those adjacent tacky members 18. For example, among the plural adhesives 16 that are disposed in the second direction, only the adhesives 16 that are adjacent to the adjacent tacky members 18 may be made to be thermally-conductive adhesives.

In this case, a local rise in temperature in a vicinity of the wired object 70 can be suppressed more effectively, and the aforementioned problems can be prevented.

Further, in the present embodiment, as illustrated in Fig. 7, the plate-shaped battery 12 is the bipolar battery module 12. The bipolar battery module 12 has the bipolar electrode stack 30, and the holding body 50 that holds the peripheral edge portions of the electrode stack 30.

Therefore, quality can be improved in the power storage device 10 in which the bipolar battery modules 12 and the plate-shaped members 14 are stacked.

In the present embodiment, as illustrated in Fig. 3, the plural plate-shaped batteries 12 are provided, and the one or plural plate-shaped members 14 are provided so as to be nipped between the two plate-shaped batteries 12 that are adjacent to one another among the plural plate-shaped batteries 12. Further, the two plate-shaped batteries 12 that are adjacent to one another among the plural plate-shaped batteries 12 are conductively connected via the plate-shaped member 14 that is nipped between these two plate-shaped batteries 12. Therefore, from the standpoint of quality, it is greatly desirable that the managing of the thickness of the layers that are formed between the plate-shaped batteries 12 and the plate-shaped members 14 (the layers in which the adhesives 16 are disposed) be carried out appropriately. With regard to this point, because the power storage device of the present embodiment has the at least one tacky member 18 disposed between the plate-shaped battery 12 and the plate-shaped member 14, the quality of the power storage device 10 can be ensured.

### (Method of Manufacturing Power Storage Device)

In the present embodiment, the manufacturing method includes the compressing step (see Fig. 2). The compressing step is a step of, in the state in which the adhesives 16 before hardening and the tacky members 18 are placed between the plate-shaped batteries 12 and the plate-shaped members 14, applying compressive load to the plate-shaped batteries 12 and the plate-shaped members 14 in the thickness directions thereof.

Therefore, as compared with a form in which the manufacturing method does not include the compressing step, managing of the thicknesses of the layers that are formed between the plate-shaped batteries 12 and the plate-shaped members 14 (the layers in which the adhesives 16 are disposed) can be carried out appropriately.

Further, in the present embodiment, the time over which the compressive load is applied in the compressing step is 30 minutes or less (more preferably one minute or less, and even more preferably 30 seconds or less).

Therefore, the mass producibility can be improved as compared with a form in which the compressing time is several hours for example. Note that the tacky members 18 exhibit the adhesive force necessary for correcting the warping of the plate-shaped batteries 12 and the like, even in a compressing time that is a short time as compared with the adhesives 16. Therefore, the application of load can be finished while the adhesives are in an unhardened state.

### <Modified Example of First Embodiment>

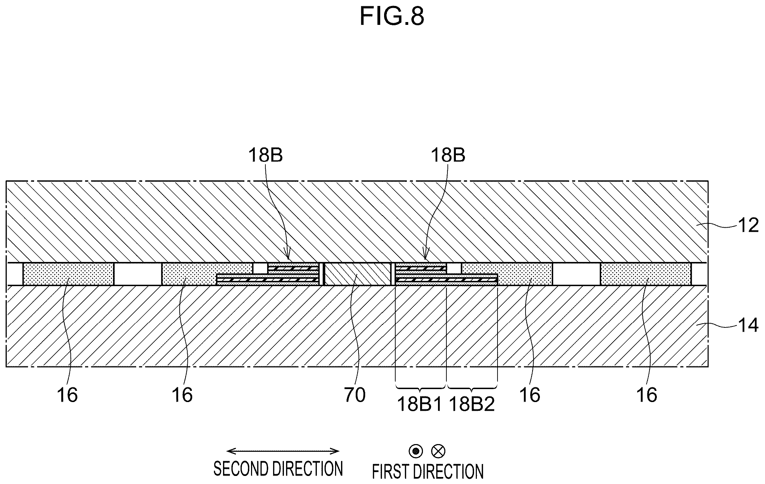

Fig. 8 is a schematic sectional view illustrating adjacent tacky members 18B relating to a modified example.

The adjacent tacky members 18B include near portions 18B1 that structure portions near the temperature measuring device 70, and general portions 18B2 structuring the sides far from the temperature measuring device 70. The thickness dimension of the near portions 18B1 is larger than that of the general portions 18B2. Due thereto, the near portions 18B1 contact both the plate-shaped battery 12 and the plate-shaped member 14, whereas the general portions 18B2 are in a state of contacting only one of the plate-shaped battery 12 and the plate-shaped member 14. Accordingly, a gap is formed between the general portion 18B2 and the another of the plate-shaped battery 12 and the plate-shaped member 14.

The adhesive 16 enters into this gap. This adhesive 16 is a thermally-conductive adhesive. Due thereto, the thermal conductivity (cooling ability) can be improved, while entry of the adhesive 16 in toward the temperature measuring device 70 side is suppressed. The reason for this is because, generally, it is easier to ready a thermally-conductive adhesive that has high thermal conductivity than a thermally-conductive tacky member that has high thermal conductivity.

Note that the means for making the near portion 18B1 and the general portion 18B2 of the adjacent tacky member 18B into the above-described structure is not particularly limited. As an example, as illustrated in Fig. 8, it can be thought to layer two double-sided tacky tapes at the portion near the temperature measuring device 70.

Although preferred embodiments of the present disclosure have been described above, the present disclosure is not limited to the descriptions thereof.

### Explanation of Reference Numerals

10 power storage device
12 bipolar battery module (plate-shaped battery)
14 plate-shaped member
16 adhesive
18 double-sided tacky tape (tacky member)
18C central region tacky member
18S outer side region tacky member
18 adjacent tacky member
18B1 near portion
18B adjacent tacky member
18B2 general portion
18a base material
18b tackifier
19A, 19B insulating sheet
19A each insulating sheet
19A first insulating sheet
19B second insulating sheet
22A, 22B collector plate
24 second cooler
24 cooler
26 electrically-conductive plate
30 electrode stack
32 bipolar electrode
34 one side electrode
36 another side electrode
38 separator
42 collector
44 positive electrode active material layer
46 negative electrode active material layer
50 holding body
60 case
62 lower case
64 upper case
70 temperature measuring device (wired object)

## Claims

1. A power storage device, comprising:
a plate-shaped battery;
a plate-shaped member disposed at one side, in a thickness direction, of the plate-shaped battery, in a state in which a thickness direction of the plate-shaped member faces in a same direction as a thickness direction of the plate-shaped battery;
an adhesive disposed between the plate-shaped battery and the plate-shaped member, and fixing the plate-shaped battery and the plate-shaped member; and
at least one tacky member disposed between the plate-shaped battery and the plate-shaped member, and fixing the plate-shaped battery and the plate-shaped member.

2. The power storage device of claim 1, wherein the at least one tacky member includes a tacky member disposed along a first direction that is a direction orthogonal to the thickness direction.

3. The power storage device of claim 1, wherein the at least one tacky member includes a central region tacky member that is disposed along a first direction that is a direction orthogonal to the thickness direction, and is disposed in a central 30% region of the plate-shaped battery in a second direction that is a direction orthogonal to both the thickness direction and the first direction.

4. The power storage device of claim 1, wherein the at least one tacky member is structured from only at least one central region tacky member that is disposed along a first direction that is a direction orthogonal to the thickness direction, and is disposed in a central 30% region of the plate-shaped battery in a second direction that is a direction orthogonal to both the thickness direction and the first direction.

5. The power storage device of claim 1, wherein the at least one tacky member includes:
at least one central region tacky member that is disposed along a first direction that is a direction orthogonal to the thickness direction, and is disposed in a region that is a central 30% region of the plate-shaped battery in a second direction that is a direction orthogonal to both the thickness direction and the first direction, and
at least one outer side region tacky member that is disposed along the first direction and is disposed in a region other than the central 30% region of the plate-shaped battery in the second direction, and
a placement surface area of the central region tacky member is greater than a placement surface area of the outer side region tacky member.

6. The power storage device of claim 1, wherein a placement surface area of the adhesive is greater than a placement surface area of the at least one tacky member.

7. The power storage device of claim 1, comprising a wired object disposed between the plate-shaped battery and the plate-shaped member, wherein:
the at least one tacky member includes an adjacent tacky member that is adjacent to the wired object so as to run along the wired object, and
an adhesive is not disposed between the adjacent tacky member and the wired object.

8. The power storage device of claim 1, comprising a wired object disposed between the plate-shaped battery and the plate-shaped member, wherein:
the at least one tacky member includes a pair of adjacent tacky members that are adjacent to the wired object so as to run along the wired object,
the wired object is positioned between the pair of adjacent tacky members, and
an adhesive is not disposed between the pair of adjacent tacky members.

9. The power storage device of claim 7, wherein:
the wired object functions to measure temperature, and
the adjacent tacky member is a thermally-conductive tacky member.

10. The power storage device of claim 9, wherein:
the adhesive includes a thermally-conductive adhesive, and
the thermally-conductive adhesive is adjacent to the adjacent tacky member so as to run along the adjacent tacky member.

11. The power storage device of claim 1, wherein the plate-shaped battery is a bipolar battery module that has:
a bipolar electrode stack, and
a holding body holding peripheral edge portions of the electrode stack.

12. The power storage device of claim 11, wherein:
a plurality of plate-shaped batteries are provided,
one or a plurality of plate-shaped members are provided so as to be nipped between two plate-shaped batteries that are adjacent to one another among the plurality of plate-shaped batteries, and
the two plate-shaped batteries that are adjacent to one another among the plurality of plate-shaped batteries are conductively connected via the plate-shaped member that is nipped between the two plate-shaped batteries.

13. A method of manufacturing a power storage device that has:
a plate-shaped battery,
a plate-shaped member disposed at a thickness direction one side of the plate-shaped battery, in a state in which a thickness direction of the plate-shaped member faces in a same direction as a thickness direction of the plate-shaped battery,
an adhesive disposed between the plate-shaped battery and the plate-shaped member, and fixing the plate-shaped battery and the plate-shaped member, and
at least one tacky member disposed between the plate-shaped battery and the plate-shaped member, and fixing the plate-shaped battery and the plate-shaped member,
the method of manufacturing comprising, in a state in which the adhesive before hardening and the tacky member are disposed between the plate-shaped battery and the plate-shaped member, applying a compressive load to the plate-shaped battery and the plate-shaped member in thickness directions thereof.

14. The method of manufacturing a power storage device of claim 13, wherein a time period over which the compressive load is applied is 30 minutes or less.
